# EUROPEAN PATENT APPLICATION

(11) **EP 1 577 780 A1**
(43) Date of publication of application: **21.09.2005**
(21) Application number: 03780744.3
(22) Date of filing: 12.12.2003
(51) Int. Cl.: G06F 12/14, G06K 19/073

(54) **MEMORY DEVICE AND ELECTRONIC DEVICE USING THE SAME**

(30) Priority: 16.12.2002 JP 2002363597
(71) Applicant: MATSUSHITA ELECTRIC INDUSTRIAL CO., LTD., Osaka 571-8501 (JP)
(72) Inventor: TAKAGI, Yoshihiko, Ota-ku, Tokyo 144-0046 (JP); NAKANISHI, Yoshiaki, Suginami-ku, Tokyo 166-0014 (JP); SASAKI, Osamu, Ota-ku, Tokyo 144-0046 (JP); KIKUCHI, Takafumi, Ota-ku, Tokyo 144-0046 (JP)
(74) Representative: Grünecker, Kinkeldey, Stockmair & Schwanhäusser Anwaltssozietät
(86) International application number: PCT/JP2003/016000
(87) International publication number: WO 2004/055680

(57) **Abstract**

It is an obj ect of the invention to provide a memory device including a memory area having a large storage capacity and an equal security level to that of a Smart card.

A semiconductor memory card 10 that can be attached to and detached from an electronic device is provided with first memory 50 of non-tamper-resistance having usual areas 52 and 53 that can be accessed from the electronic device and a secure area 51 that cannot directly be accessed from the electronic device, and second memory 41 of tamper resistance that cannot directly be accessed from the electronic device, wherein access to the secure area 51 of the first memory 50 can be made only through a secure control section 30 for managing access to the second memory 41. The secure area 51 cannot directly be accessed by an external device and therefore has the higher security level than the authentication area 52. Since the secure area 51 is placed in the non-tamper-resistant memory 50, a large storage capacity can be reserved.

## Description

### <Technical Field>

This invention relates to a memory device such as a semiconductor memory card and an electronic device for writing/reading data into/from the memory device, and in particular to implementation of a storage medium assuring a high level of security and having a large storage capacity.

### <Background Art>

A semiconductor memory card including nonvolatile semiconductor memory as a storage medium, (which will be hereinafter referred to as "memory card"), has a small storage capacity as compared with a disc-like storage medium such as a DVD, but does not require a large mechanical section and is small and easy to handle and is also excellent in earthquake resistance and therefore recently has had the use range expanded as a storage medium fitted for portable use.

The memory card may or may not contain a CPU (microcomputer). The function of the CPU in the memory card containing the CPU is to perform nonvolatile memory read and write processing requested by an external device.

The nonvolatile memory of the memory card is also provided with a secure area for increasing the security level. Patent document 1 mentioned below describes a memory card having nonvolatile memory provided with an authentication area that can be accessed only by external devices achieving success in authentication and a non-authentication area that can be accessed by any external device. Using the memory card, encrypted music content is stored in the non-authentication area and a decryption key for decrypting the encrypted music content is stored in the authentication area, whereby it is made possible to secure the copyright on the music content.

The function of the CPU in such memory card is to perform authentication processing of an external device to permit the external device to access the authentication area in addition to read and write processing.

In any way, the functions of the CPU in the memory card are limited to memory read and write and processing appurtenant to the memory read and write, and the data recorded in the memory is controlled by an external device.

On the other hand, a Smart card containing a CPU has a memory area together with the CPU in a tamper-resistant module. The tamper-resistant module inhibits an external device from directly accessing the memory area without authentication. Thus, the Smart card involves high secret keeping properties against copying and forgery and is used digital cash service, etc., requiring a high security level.

The functions of the CPU in the Smart card covers a broad spectrum of not only memory read and write, but also encryption of external input data, signature generation, signature verification, entered personal identification number check, etc. The data recorded in the memory of the Smart card is controlled by the CPU in the Smart card.

Thus, the CPU of the Smart card is multifunctional and is highly secure as compared with the CPU contained in the memory card in the related art.

### [Patent document 1] JP-A-2001-14441

However, the Smart card has a limited storable information capacity and enlargement of the information capacity is demanded by service providers, etc., with diversification of digital cash service. For example, if an attempt is made to execute service of recording electronic receipts and transaction logs for the purpose of circumventing trouble of double withdrawal of digital cash, etc., it becomes necessary to provide a large information capacity as compared with the capacity of a related Smart card to store cumulative electronic receipts, etc.

On the other hand, the memory card described above in patent document 1 can be provided with a large information capacity to some extent because the authentication area can be set variably. However, the authentication area is an area that can be controlled directly by an external device and therefore the security level is low as compared with the Smart card.

### <Disclosure of the Invention>

The invention is intended for solving the problems involved in the related arts and it is an obj ect of the invention to provide a memory device including a memory area having a large storage capacity and an equal security level to that of a Smart card and provide an electronic device using the memory device.

According to the invention, a memory device being connected to an electronic device fixedly or detachably is provided with first memory of non-tamper-resistance having a usual area that can be accessed from the electronic device and a secure area that cannot directly be accessed from the electronic device, and second memory of tamper resistance that cannot directly be accessed from the electronic device, wherein access to the secure area of the first memory can be made only through a secure control section for managing access to the second memory.

The secure area cannot directly be accessed by an external device and therefore has the higher security level than the authentication area in the related art. Moreover, since the secure area is placed in the non-tamper-resistant memory, a large storage capacity can be reserved at a low cost.

Further, according to the invention, an electronic device for accessing a memory device having a first area, a second area, and a third area as memory areas accesses the first area of a non-tamper-resistant memory area of the memory device through a general control section of the memory device for controlling access to the memory device upon reception of an access request to the memory device, accesses the second area of a non-tamper-resistant memory area through the general control section and a secure control section of the memory device for controlling access to the second area and the third area after authentication with the secure control section, and accesses the third area of a tamper-resistant memory area of the memory device through the general control section and the secure control section after authentication with the secure control section.

The electronic device can provide various services making the most of the memory device of a semiconductor memory card, etc.

### <Brief Description of the Drawings>

FIG. 1 is a conceptual drawing of a secure memory card in an embodiment of the invention;
FIG. 2 is a block diagram to show the configuration of the secure memory card in the embodiment of the invention;
FIG. 3 is a conceptual drawing of a system for using the secure memory card in the embodiment of the invention;
FIG. 4 is a block diagram to show the configuration of an R/W unit in the embodiment of the invention;
FIG. 5 is a sequence to show a write procedure of the secure memory card in the embodiment of the invention;
FIG. 6 is a sequence to show continuation of the write procedure of the secure memory card in the embodiment of the invention;
FIG. 7 is a sequence to show another write procedure of the secure memory card in the embodiment of the invention;
FIG. 8 is a drawing to show the structure of large-capacity nonvolatile memory of the secure memory card in the embodiment of the invention;
FIG. 9 is a drawing to show logical-physical address translation tables in the embodiment of the invention;
FIG. 10 is a drawing to show another example of logical-physical address translation tables in the embodiment of the invention;
FIG. 11 is a drawing to show a different structure of large-capacity nonvolatile memory of the secure memory card in the embodiment of the invention; and
FIG. 12 is a drawing to show a different example of logical-physical address translation tables in the embodiment of the invention.

Incidentally, the reference numerals in the accompanying drawings denote the following: 10---secure memory card; 11---IC section; 12---I/F section; 13---IC command processing section; 14---file management section; 15---IC authentication section; 16---memory management section; 17---encryption and decryption circuit; 18---internal nonvolatile memory I/F section; 20---control section; 21---data I/F section; 22---command I/F section; 23---control authentication section; 24---command processing section; 25---access control section; 26---large-capacity nonvolatile memory I/F section; 40---TRM; 41---internal nonvolatile memory; 50---large-capacity nonvolatile memory; 51---secure area; 52---authentication area; 53---non-authentication area; 60---external CPU; 61---mobile telephone; 62---ROM; 63---RAM; 64---liquid crystal display section; 65---wireless communication section; 66---operation button; 67---card I/F section; 68---authentication circuit; 69---R/W unit; 70---internal bus; 91---charge terminal; 92---charge server; 93---payment server; 94---delivery server; 95---network; 621---command generation program; 622---authentication key group.

### <Best Mode for Carrying out the Invention>

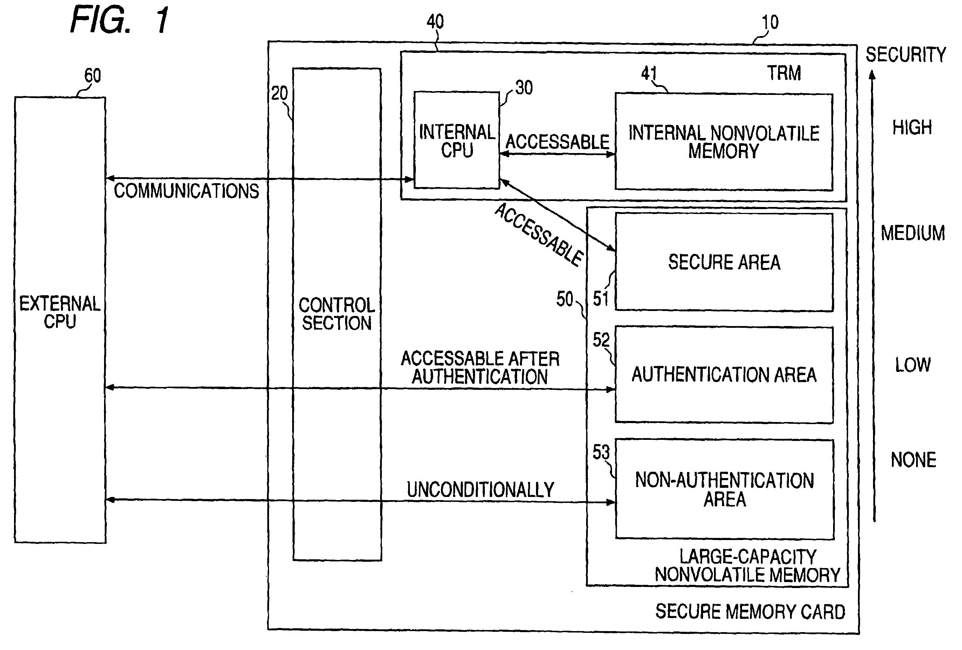

A semiconductor memory card in an embodiment of the invention (here, called "secure memory card") comprises a tamper-resistant module (TRM) 40 including internal nonvolatile memory 41, large-capacity nonvolatile memory 50 including a non-authentication area 53, an authentication area 52, and a secure area 51, an internal CPU 30 for accessing the internal nonvolatile memory 41 and the secure area 51, and a control section 20 for communicating with an external CPU 60 of an electronic device (read/write (R/W) unit) to perform authentication processing and permitting the authenticated external CPU 60 to access the authentication area 52, as shown in a conceptual drawing of FIG. 1.

The nonvolatile memory 41 of the TRM 40 is implemented as EEPROM that can be erased and written in 16-byte units, for example. The large-capacity nonvolatile memory 50 is implemented as flash memory that can be erased in block units of 16K bytes, etc., and can be written in 512-bytes units, for example.

The external CPU 60 can access the non-authentication area 53 unconditionally and can access the authentication area 52 when the external CPU 60 is authenticated by the control section 20. However, the external CPU 60 cannot know the presence of the secure area 51 or the internal nonvolatile memory 41 and cannot directly access the secure area 51 or the internal nonvolatile memory 41.

Only the internal CPU 30 can access the secure area 51 and the internal nonvolatile memory 41. The secure area 51 differs from the internal nonvolatile memory 41 in that the latter is placed in the TRM 40; whereas, the former is placed in the large-capacity nonvolatile memory 53 having no tamper resistance. Thus, the secure area 51 can have a large storage capacity as compared with the internal nonvolatile memory 41. In contrast, it has a lower security level than the internal nonvolatile memory 41 placed in the TRM 40. The security levels of the four areas are assigned in the order of the non-authentication area 53, the authentication area 52, the secure area 51, and the internal nonvolatile memory 41 from low to high.

The configuration of secure memory card 10 is described later in detail and the use mode will be discussed.

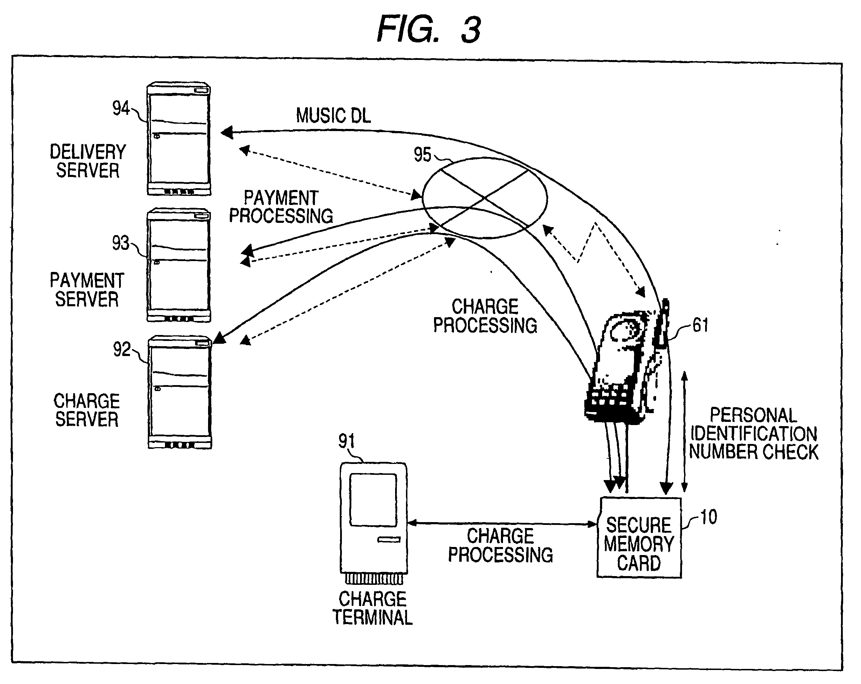

The secure memory card can be used in a music delivery system as shown in FIG. 3 or the like, for example. In this system, the secure memory card 10 is placed in a mobile telephone of an R/W unit. The system includes a delivery server 94 for delivering music through a network 95, a payment server 93 for performing payment processing, and a charge server 92 for charging digital cash into the memory card 10, and a digital cash charge terminal 91.

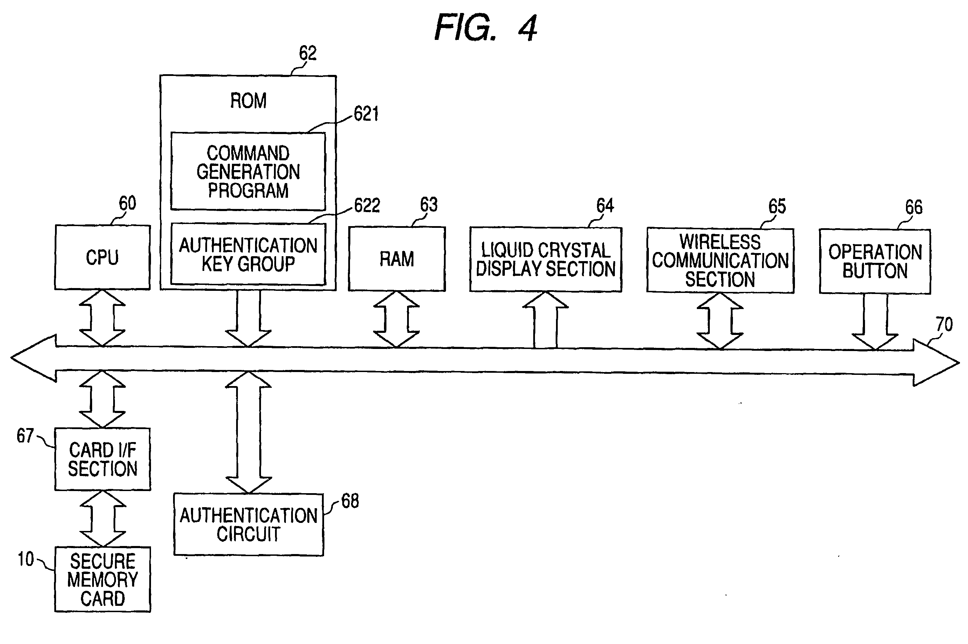

The mobile telephone 61 includes a CPU 60 corresponding to the external CPU in FIG. 1, ROM 62 previously storing an authentication key group 622 used for authentication and a command generation program 621, RAM 63 uses as a work area of the CPU 60, a liquid crystal display section 64 implementing a display screen, a wireless communication section 65 for conducting wireless communications through a network, an operation button 66 operated by the user, a card I/F section 67 for connecting the secure memory card 10 to an internal bus 70, and an authentication circuit 68 for conducting mutual authentication with the secure memory card 10, the components being connected by the internal bus 70, as shown in a block diagram of FIG. 4.

The user first charges digital cash into the secure memory card 10. To do this, the user places the secure memory card 10 in the charge terminal 91 and operates the charge terminal 91 according to a displayed instruction. At this time, the charge terminal 91 requests the internal CPU 30 of the secure memory card 10 to start a money reception application. Upon reception of a money reception processing request of digital cash from the charge terminal 91, the internal CPU 30 starting the money reception application determines that data is to be written into the internal nonvolatile memory 41 from the request command, and writes the amount of money reported from the charge terminal 91 into the internal nonvolatile memory 41. Thus, cash information is stored in the internal nonvolatile memory 41.

Digital cash can also be charged online with the charge server 92 accessed from the mobile telephone 61 in which the secure memory card 10 is placed.

Next, the user accesses the delivery server 94 from the mobile telephone 61 and makes a request for purchasing music content. The delivery server 94 requests the user to pay the price for the music content. Upon reception of the request, the CPU 60 of the mobile telephone 61 requests the internal CPU 30 of the secure memory card 10 to start a payment application. The internal CPU 30 starting the payment application authenticates the mobile telephone 61 and then subtracts the payment reported from the mobile telephone 61 from the remaining amount of digital cash recorded in the internal nonvolatile memory 41. Then, the delivery server 94 transmits an electronic receipt to the mobile telephone 61, and the CPU 60 of the mobile telephone 61 sends a storage request of the electronic receipt to the internal CPU 30 of the secure memory card 10. The internal CPU 30 determines that the data is to be written into the secure area 51 from the request command, and stores the electronic receipt in the secure area 51.

The payment processing can also be performed with the payment server 93 as the credit number stored in the internal nonvolatile memory 41 is presented to the payment server 93.

After completion of the payment, the delivery server 94 transmits encrypted music content and its decryption key to the mobile telephone 61. The CPU 60 of the mobile telephone 61 determines the reception data, stores the content decryption key in the authentication area 52 of the secure memory card 10, and stores the encrypted content in the non-authentication area 53 of the secure memory card 10.

Thus, in the system, cash information is stored in the internal nonvolatile memory 41 of the TRM 40 of the secure memory card 10, the electronic receipt is stored in the secure area 51, the decryption key is stored in the authentication area 52, and the encrypted content is stored in the non-authentication area 53.

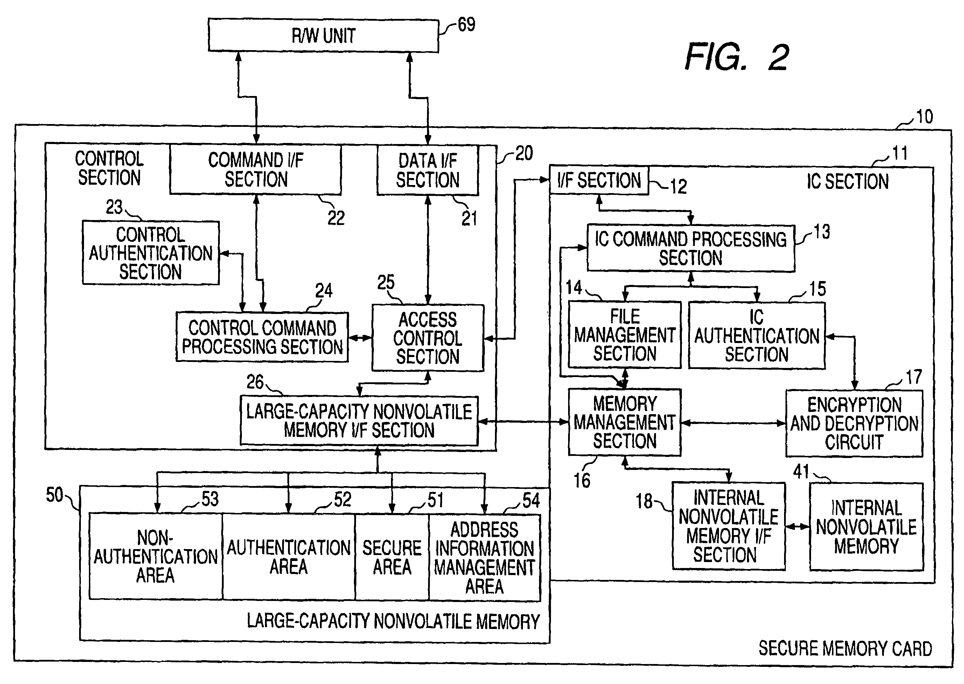

FIG. 2 is a block diagram to show the configuration of the secure memory card 10. The secure memory card 10 is roughly made up of the control section 20, the large-capacity nonvolatile memory 50, and an IC section 11 corresponding to the TRM 40 in FIG. 1. The large-capacity nonvolatile memory 50 has the non-authentication area 53, the authentication area 52, the secure area 51, and an address information management area 54 storing address information of the areas.

The control section 20 includes a data I/F section 21 for transferring data to and from an R/W unit 69, a command I/F section 22 for transferring a command to and from the R/W unit 69, a control authentication section 23 for authenticating the R/W unit 69, a control command processing section 24 for interpreting the accepted command and performing processing responsive to the command, an access control section 25 for controlling access to the large-capacity nonvolatile memory 50 and used as a transfer window of data to and from the IC section 11, and a large-capacity nonvolatile memory I/F section 26 for transferring data to and from the large-capacity nonvolatile memory 50.

The tamper-resistant IC section 11 includes the internal nonvolatile memory 41, an I/F section 12 for transferring data and a command to and from the control section 20, an IC command processing section 13 for interpreting the command and performing processing responsive to the command, a file management section 14 for managing data stored in a file format in the internal nonvolatile memory 41 and the secure area 51, an IC authentication section 15 for authenticating the R/W unit 69 and permitting the authenticated R/W unit 69 to make data access to the internal nonvolatile memory 41 and the secure area 51, an encryption and decryption circuit 17 for encrypting/decrypting write/read data into/from the internal nonvolatile memory 41 and the secure area 51 using the key stored the internal nonvolatile memory 41, a memory management section 16 for managing the internal nonvolatile memory 41 and the secure area 51, and an internal nonvolatile memory I/F section 18 for transferring data to and from the internal nonvolatile memory 41. Secure control section as claimed in Claims corresponds to the IC command processing section 13, the IC authentication section 15, the encryption and decryption circuit 17, the file management section 14, and the memory management section 16 of the IC section 11.

The control command processing section 24 of the control section 20 interprets a command received from the R/W unit 69 and determines whether or not the command
. makes a request for accessing the authentication area 52 or the non-authentication area 53 of the large-capacity nonvolatile memory 50;
. makes an authentication request;
. requests the IC section 11 to perform processing
and when the command makes a request for accessing the authentication area 52 or the non-authentication area 53 of the large-capacity nonvolatile memory 50, the control command processing section 24 instructs the access control section 25 to control access to the large-capacity nonvolatile memory 50; when the command requests the IC section 11 to perform processing, the control command processing section 24 instructs the access control section 25 to transfer the command to the IC section 11; and when the command makes an authentication request, the control command processing section 24 instructs the control authentication section 23 to perform authentication processing.

Access to the authentication area 52 is permitted only when the control authentication section 23 has authenticated the terminal.

To control access to the large-capacity nonvolatile memory 50, the access control section 25 references the address information recorded in the address information management area 54 of the large-capacity nonvolatile memory 50. When the terminal (R/W unit 69) makes an access request with specification of the logical address of the large-capacity nonvolatile memory 50, the access control section 25 determines which area of the large-capacity nonvolatile memory 50 the specified address belongs to from the record in the address information management area 54, and permits the access request to the authentication area 52 only when the terminal is already authenticated.

The IC command processing section 13 of the IC section 11 interprets a command transmitted from the control section 20 and determines whether or not the command
. makes a request for writing/reading data into/from the internal nonvolatile memory 41;
. makes a request for writing/reading data into/from the secure area 51;
. makes an authentication request;
. makes a request for any other processing.

When the command makes a request for starting an application, the IC command processing section 13 internally starts the application.

The application is interpretation mode of a command received from the R/W unit 69, and the command received by the IC command processing section 13 from the R/W unit 69 after the application is started is interpreted by the IC command processing section 13 according to interpretation determined between the application and the R/W unit 69.

When the command received after the application is started makes an authentication request, the IC command processing section 13 instructs the IC authentication section 15 to perform authentication processing of the R/W unit 69.

When the command is a command for making a request for writing/reading data into/from the internal nonvolatile memory 41 or for writing/reading data into/from the secure area 51, determined between the internally started application and the R/W unit 69, the IC command processing section 13 checks whether or not the R/W unit 69 is already authenticated in the IC authentication section 15.

If the R/W unit 69 is already authenticated, the request is permitted and when the request is a write request, write data is sent to the memory management section 16 with storage destination information.

The memory management section 16 for managing the internal nonvolatile memory 41 and the secure area 51 encrypts the write data by the encryption and decryption circuit 17 (at this time, the encryption and decryption circuit 17 encrypts the write data using the encryption key stored the internal nonvolatile memory 41) and then writes the data to be written into the internal nonvolatile memory 41 into the internal nonvolatile memory 41 through the internal nonvolatile memory I/F section 18 and transfers write location information to the file management section 14. The memory management section 16 also writes the data to be written into the secure area 51 into the secure area 51 of the large-capacity nonvolatile memory 50 through the large-capacity nonvolatile memory I/F section 26 and transfers write location information to the file management section 14.

The file management section 14 manages files stored in the internal nonvolatile memory 41 and the secure area 51 based on the information transferred from the memory management section 16.

When the request is a read request, the IC command processing section 13 finds the file location of the data to be read in the file management section 14, and requests the memory management section 16 to read the file.

When the memory management section 16 reads the file from the internal nonvolatile memory 41 or the secure area 51, the memory management section 16 decrypts the data by the encryption and decryption circuit 17 (at this time, the encryption and decryption circuit 17 decrypts the data using the encryption key stored the internal nonvolatile memory 41) and sends the data to the IC command processing section 13.

The decrypted data is sent to the control section 20 and is transmitted from the data I/F section 21 to the R/W unit 69.

The write/read conditions into/from the non-authentication area 53, the authentication area 52, and the secure area 51 of the large-capacity nonvolatile memory 50, and the internal nonvolatile memory 41 are arranged as follows:
. Non-authentication area: Can be accessed unconditionally. Data can be written/read with a usual command for accessing the non-authentication area 53.
. Authentication area: The terminal needs to be authenticated by the control authentication section 23 of the control section 20. As the control authentication section 23 authenticates the terminal, it is made possible to access the authentication area 52 using the logical address of the authentication area 52.
. Secure area: The terminal needs to be authenticated by the IC authentication section 15 (= IC section application) of the IC section 11. It is made possible to write/read data according to a command determined between the IC section application and the terminal (or it is made possible to write/read data as a part of processing of the IC section application). The secure area cannot be seen from the terminal and the terminal cannot access the secure area using the logical address of the secure area.
. Internal nonvolatile memory: The write/read conditions into/from the internal nonvolatile memory are the same as those into/from the secure area. Authentication for accessing the secure area may be made different from authentication for accessing the internal nonvolatile memory.

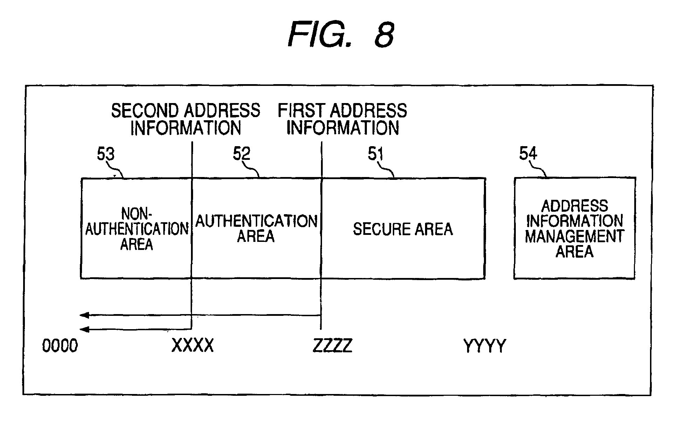

FIG. 8 shows the internal structure of the large-capacity nonvolatile memory 50. Here, in the physical address space of the large-capacity nonvolatile memory 50, the non-authentication area 53 is placed at 0000 to (XXXX-1), the authentication area 52 is placed at XXXX to (ZZZZ-1), and the secure area 51 is placed at ZZZZ to (YYYY). First address information indicating the boundary between the secure area 51 and the authentication area 52 is ZZZZ, and second address information indicating the boundary between the authentication area 52 and the non-authentication area 53 is XXXX. The size of the non-authentication area 53 is XXXX, that of the authentication area 52 is ZZZZ-XXXX, and that of the secure area 51 is YYYY-ZZZZ+1.

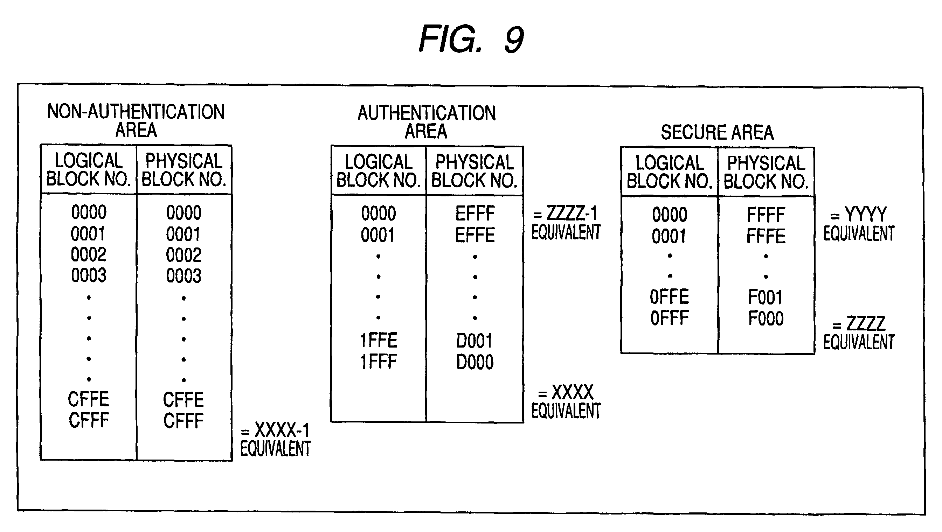

FIG. 9 shows a "logical-physical address translation table" representing the correspondence between the physical addresses and the logical addresses of each area. The logical addresses of the non-authentication area 53 are 0000 to (XXXX-1), those of the authentication area 52 are 0000 to (ZZZZ-XXXX-1), and those of the secure area 51 are 0000 to (YYYY-ZZZZ).

The address information management area 54 holds the first address information, the second address information, and the logical-physical address translation tables of the areas. The logical address cannot be specified beyond the allocated logical address boundary for any of the non-authentication area 53, the authentication area 52, or the secure area 51, but the boundary between the areas can be moved to expand or shrink each area.

The secure area 51 can be expanded/shrunk as the first address information is changed. In the logical-physical address translation tables in FIG. 9, the logical address orders in the non-authentication area 53 and the authentication area 52 are the normal orders of the physical address orders, and the logical address order in the secure area 51 is the inverse order to the physical address order. Thus, when the boundary between the authentication area 52 and the secure area 51 is changed, the end addresses of the logical blocks of the authentication area 52 and the secure area 51 need only to be corrected, so that the burden of rewriting the tables accompanying the boundary change is lessened and high-speed processing is made possible.

The boundary change procedure is described later.

Next, a data storage procedure in the secure memory card will be discussed.

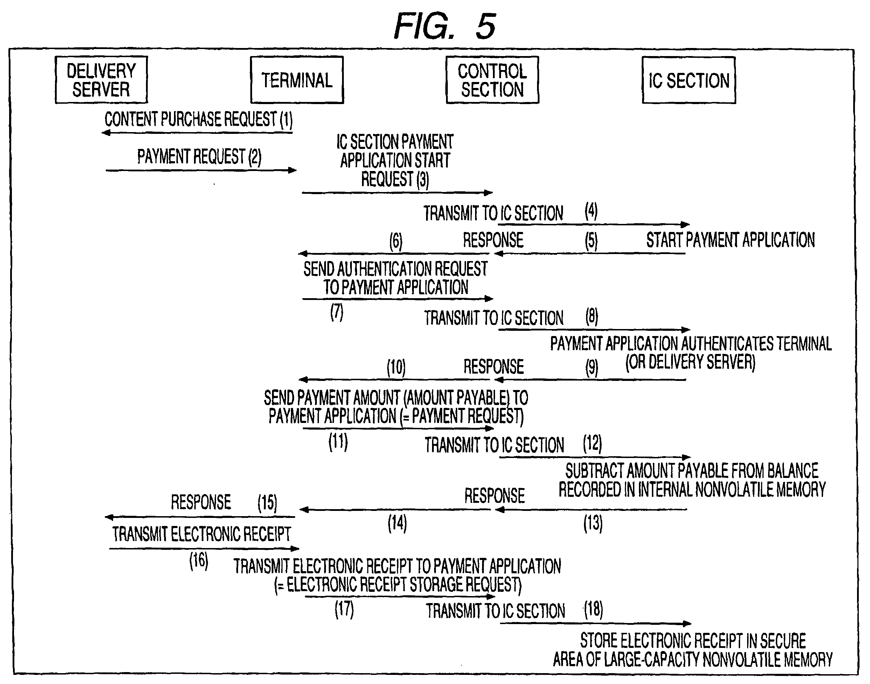

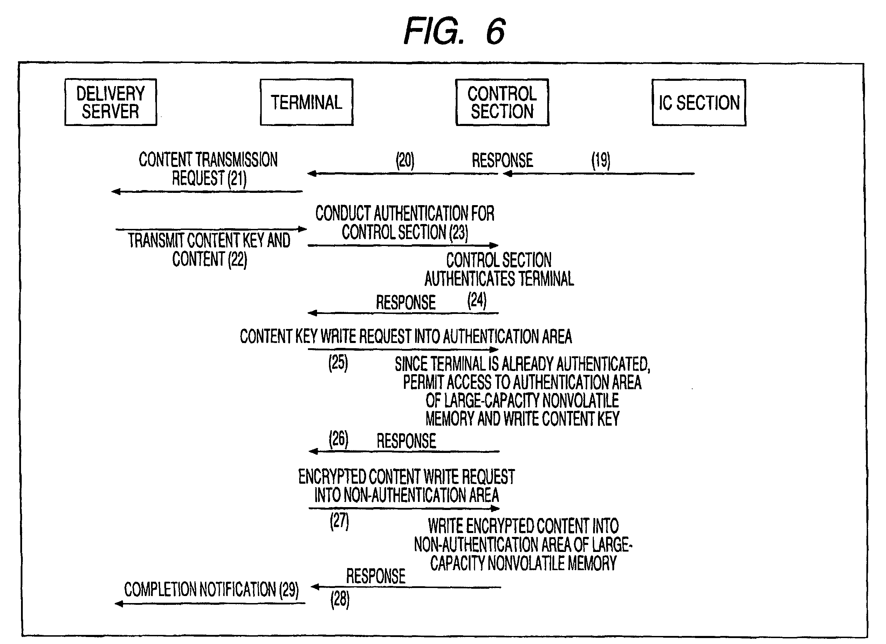

FIGS. 5 and 6 show a procedure from sending a content purchase request from the terminal in which the security memory card is placed to the delivery server and performing price payment processing to storing the electronic receipt in the secure area, the encrypted content in the non-authentication area, and the content decryption key in the authentication area.

As shown in FIG. 5, the terminal sends a content purchase request to the delivery server (1). The delivery server requests the terminal to pay the price for the content (2). The terminal transmits a command to the IC section 11 of the secure memory card 10 for requesting the IC section 11 to start the payment application (3). The control command processing section 24 of the control section 20 recognizes the command as a command given to the IC section and transmits the command to the IC section 11 (4). The IC section 11 starts the payment application, activates the IC authentication section 15, and returns a response to the terminal (5), (6). The terminal sends an authentication request command to the secure memory card 10 (7) and the control command processing section 24 of the control section 20 recognizes the command as a command given to the IC section and transmits the command to the IC section 11 (8). The IC authentication section 15 authenticates the terminal (or the delivery server) and returns the authentication result (9), (10). The authenticated terminal transmits a payment request command indicating the amount payable to the secure memory card 10 (11). The control command processing section 24 of the control section 20 recognizes the command as a command given to the IC section and transmits the command to the IC section 11 (12). The IC authentication section 15 determines that the data is to be written into the internal nonvolatile memory 41 based on the "payment request" command, subtracts the amount payable from the balance recorded in the internal nonvolatile memory 41 and rewrites the result into the internal nonvolatile memory 41, and makes a response of the processing completion (13), (14) (if the terminal is not yet authenticated in (9), the payment request is refused).

The terminal returns a response to the delivery server (15). The delivery server transmits an electronic receipt to the terminal (16). The terminal transmits an electronic receipt storage request command to the secure memory card 10 (17). The control command processing section 24 of the control section 20 recognizes the command as a command given to the IC section and transmits the command to the IC section 11. The IC authentication section 15 determines that the data is to be stored in the secure area 51 based on the "electronic receipt storage request" command and encrypts the electronic receipt by the encryption and decryption circuit 17 and then stores the encrypted electronic receipt in the secure area 51 (18) (if the terminal is not yet authenticated in (9), the electronic receipt storage request is refused).

In the authentication in (9), the IC authentication section 15 may conduct authentication to permit "payment request" and authentication to permit "electronic receipt storage request" separately (namely, authentication using different keys may be required).

As shown in FIG. 6, when a response indicating that the electronic receipt has been stored from the IC section 11 to the terminal (19) (20), the terminal requests the delivery server to transmit content (21). The delivery server transmits encrypted content and the content key for decrypting the content (22). The terminal determines that the data received from the delivery server contains the content key to be written into the authentication area 52, and requests the control section 20 of the secure memory card 10 to conduct authentication (23). The control command processing section 24 of the control section 20 interprets the command, causes the control authentication section 23 to authenticate the terminal, and returns the authentication result (24). The terminal issues a content key write request into the authentication area 52 (25). Since the terminal is already authenticated, the access control section 25 of the control section 20 permits access to the authentication area 52 and the content key is written into the authentication area 52. Upon reception of a response of the processing completion (26), the terminal determines that the encrypted content is to be written into the non-authentication area 53 and requests the secure memory card 10 to write the content into the non-authentication area 53 (27). When the encrypted content is written into the non-authentication area 53 and a response is returned to the terminal (28), the terminal transmits a completion notification to the delivery server (29).

Thus, the electronic receipt is encrypted and written into the secure area 51, the content key is written into the authentication area 52, and the encrypted content is written into the non-authentication area 53.

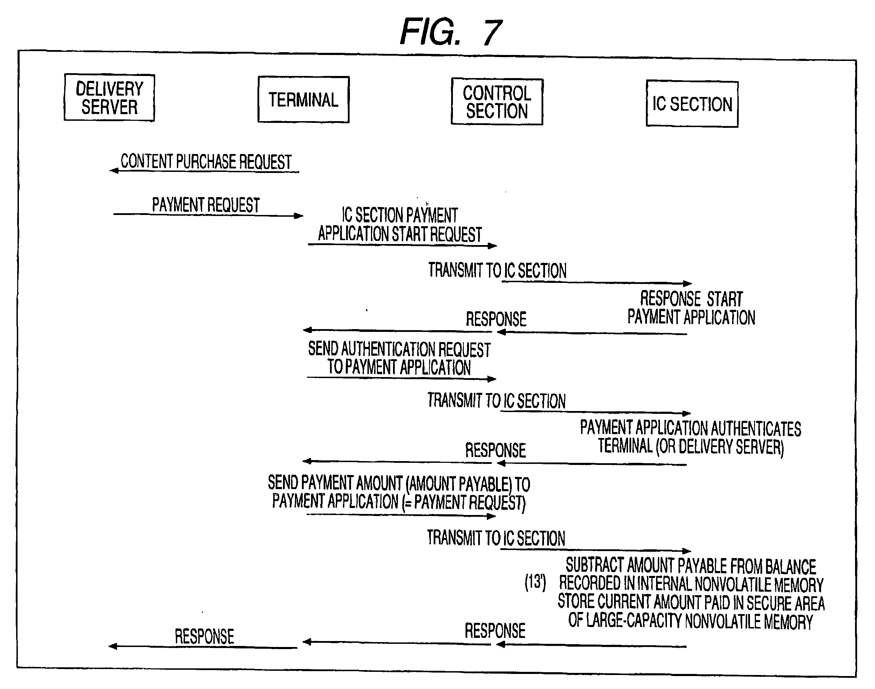

In the procedure in FIG. 5, when the amount payable is subtracted from the balance recorded in the internal nonvolatile memory 41 and the result is rewritten into the internal nonvolatile memory 41 (13), the amount payable may be written into the secure area 51 (13'), as shown in FIG. 7. In doing so, the payment log can be recorded in the secure area 51.

Before or after authentication of the payment application (3) is conducted, personal identification number check to identify the user may be executed.

Next, the procedure of changing the boundary between the areas in the large-capacity nonvolatile memory 50 will be discussed. Here, the case where the first address information in FIG. 8 is changed to expand or shrink the secure area 51 is shown.

The boundary change is made in response to a request from the terminal in which the secure memory card 10 is placed.
(1) The terminal requests the secure memory card 10 to start a boundary change application, and the IC section 11 of the secure memory card 10 starting the application activates the IC command processing section 13 and the IC authentication section 15. The terminal requests the IC section 11 to authenticate the terminal, and the IC authentication section 15 authenticates the terminal. This authentication may be separated from authentication required for accessing the internal nonvolatile memory 41 or the secure area 51, so that only some specific terminals can expand/shrink the secure area 51.
(2) The authenticated terminal sends the first address information after change (new ZZZZ) to the IC section application (IC command processing section 13).
(3) The IC command processing section 13 transfers new ZZZZ to the memory management section 16 and instructs the memory management section 16 to make boundary change of the secure area 51. The memory management section 16 corrects the logical-physical address translation tables of the secure area 51 and the authentication area 52 so as to correspond to the new ZZZZ value, and stores the new ZZZZ value and the corrected logical-physical address translation tables in the address information management area 54. At this time, in the tables of the secure area and the authentication area in FIG. 9, only the end addresses of the logical blocks are corrected.
(4) If the secure area 51 is expanded, the memory management section 16 erases the data in the portion as a new secure area; if the secure area 51 is shrunk, the memory management section 16 erases the data in the portion as a new authentication area 52. At this time, all data in the secure area and/or the authentication area may be erased.
(5) The IC command processing section 13 sends a boundary change completion notification to the terminal.

At this time, the control section 20 of the secure memory card 10 may perform boundary change processing based on a request from the IC section. In this case, the procedure is as follows:
(1) The terminal is authenticated by the IC authentication section 15 as in (1) described above.
(1') The terminal requests the control section 20 of the secure memory card 10 to authenticate the terminal. The control authentication section 23 authenticates the terminal to permit the size change of the authentication area according to an instruction of the control command processing section 24.
(2) The terminal sends the first address information after change (new ZZZZ) to the IC command processing section 13 as in (2) described above.
(3) The IC command processing section 13 requests the control section command processing section 24 to make boundary address change through the access control section 25.
(3') The control section command processing section 24 saves the ZZZZ value in the address information management area 54 and corrects the logical-physical address translation tables of the secure area and the authentication area so as to correspond to the ZZZZ value. (However, if authentication in (1') is not conducted, the boundary address change is refused and the IC command processing section 13 is notified that the boundary address change is refused.)
(4) If the secure area is expanded, the control section command processing section 24 erases the data in the portion as a new secure area; if the secure area is shrunk, the control section command processing section 24 erases the data in the portion as a new authentication area. All data in the secure area and/or the authentication area may be erased.
(5) The control section command processing section 24 sends a boundary change completion notification to the IC command processing section 13, which then sends a boundary change completion notification to the terminal (however, if the boundary address change is refused in (3'), the terminal is notified that the boundary change is refused).

The authentication area is expanded/shrunk as the second address information of the boundary between the authentication area and the non-authentication area is changed. In this case, the procedure is as follows:
(1) The terminal requests the control section 20 of the secure memory card 10 to authenticate the terminal. The control authentication section 23 authenticates the terminal to permit the size change of the authentication area according to an instruction of the control command processing section 24.
(2) The authenticated terminal sends the second address information after change (new XXXX) to the control section 20.
(3) The control section command processing section 24 saves the XXXX value in the address information management area 54 and corrects the logical-physical address translation tables of the non-authentication area and the authentication area so as to correspond to the XXXX value (however, if authentication in (1) is not conducted, the boundary address change is refused and the terminal is notified that the boundary address change is refused).
(4) If the authentication area is expanded, the control section command processing section 24 erases the data in the portion as a new authentication area; if the authentication area is shrunk, the control section command processing section 24 erases the data in the portion as a new non-authentication area. All data in the non-authentication area and/or the authentication area may be erased.
(5) The control section command processing section 24 sends a boundary change completion notification to the terminal.

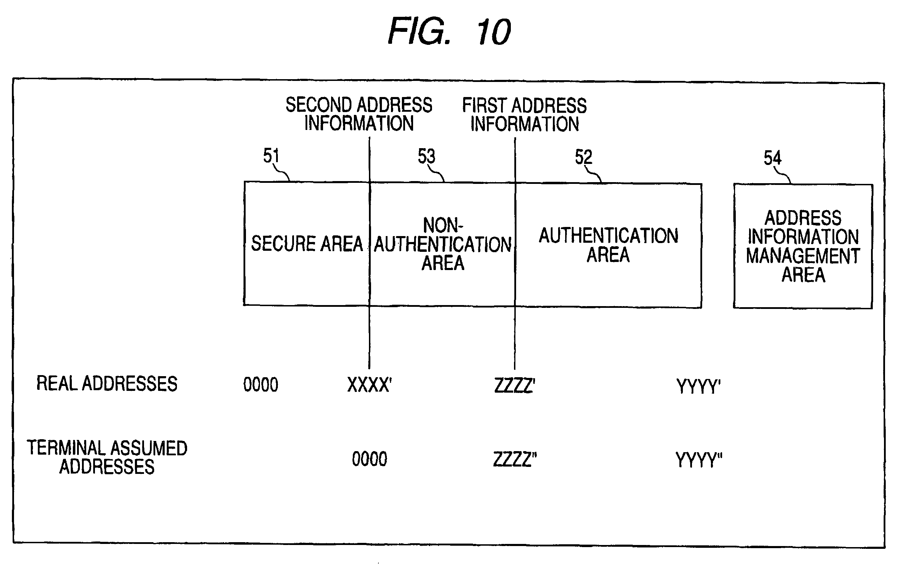

In this case, if the logical address order in the authentication area 53 is the normal order of the physical address order and the logical address order in the authentication area 52 is the inverse order to the physical address order in the logical-physical address translation tables as shown in FIG. 10, when the boundary is changed, the end addresses of the logical blocks of the non-authentication area and the authentication area need only to be corrected, so that the burden of rewriting the tables accompanying the boundary change is lessened and high-speed processing is made possible.

The non-authentication area can be expanded/shrunk as expansion/shrinkage processing of the authentication area is performed.

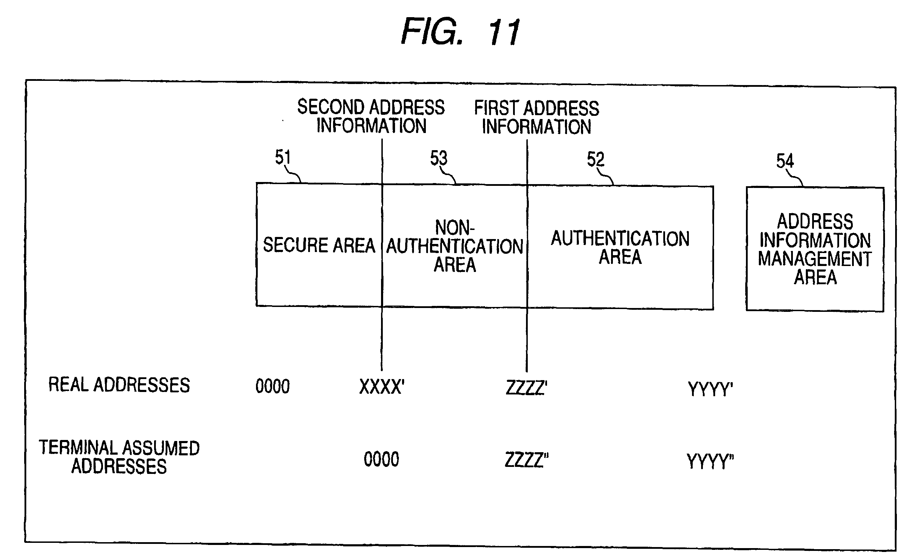

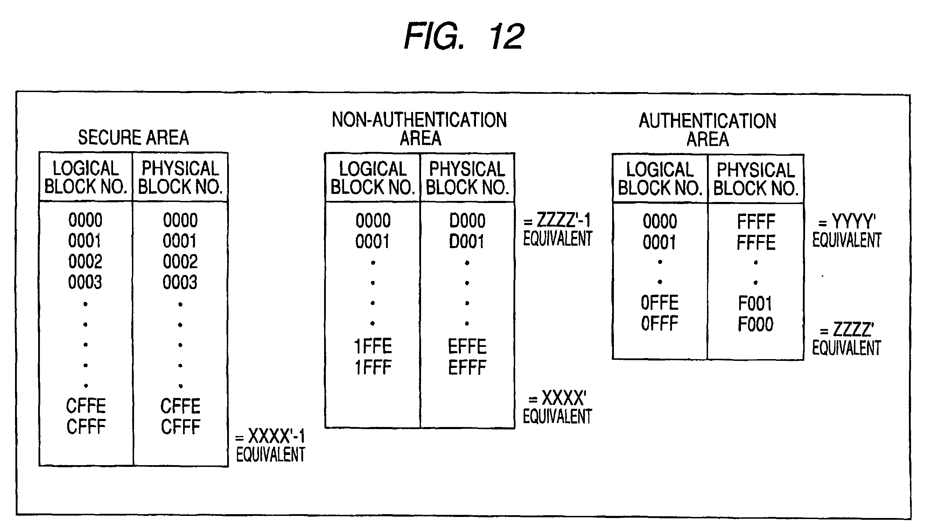

In the large-capacity nonvolatile memory 50, the secure area 51, the non-authentication area 53, and the authentication area 52 may be placed in this order as shown in FIG. 11. FIG. 12 shows an example of the logical-physical address translation tables at this time.

In this case, to hide the security area 51 from the terminal or to maintain compatibility with a memory card having no secure area, "terminal assumed addresses" different from the real boundary addresses may be provided as shown in FIG. 11. As for the terminal assumed addresses, with the secure area skipped, the top assumed physical address of the non-authentication area 53 is set to 0000 (actually, XXXX'), the assumed physical address of the boundary between the non-authentication area 53 and the authentication area 52 is set to ZZZZ" (actually, ZZZZ'), and the assumed physical address of the authentication area termination is set to YYYY" (actually, YYYY'). The terminal recognizes the boundary address as ZZZZ" and makes a request for changing the address ZZZZ" when making a request for expanding/shrinking the area. The control command processing section recognizes the relationship between ZZZZ" and ZZZZ' and changes the boundary with ZZZZ" replaced with the actual physical address ZZZZ'.

In the embodiment of the invention, the case where the large-capacity nonvolatile memory 50 is provided with the three areas of the non-authentication area, the authentication area, and the secure area as storage areas has been described, but the large-capacity nonvolatile memory 50 may be provided with only one of the non-authentication area and the authentication area as a usual area in addition to the secure area.

The case where the payment application is installed in the IC section of the secure memory card has been mainly described, but a signature generation application can also be installed.

In this case, when data is written into the secure area, the hash value of the write data is calculated and is stored in the internal nonvolatile memory of the IC section and an electronic signature is generated for the hash value. When the data is read from the secure area (after decryption), the hash value is again calculated and is compared with the hash value stored in the internal nonvolatile memory of the IC section at the writing time, whereby data defect, tampering, etc., is detected.

As such a function is installed, the secure memory card can also be used in payment and can also be used when an electronic signature is added to some data.

As the R/W unit using the secure memory card, the unit installing the digital content delivery service application and having the payment function and the content download and storage function in the memory card has been described, but the R/W unit needs to have the following functions to make the most of the secure memory card:
. Can generate a command for reading and writing the usual area of the secure memory card.
. Can generate an IC command for requesting the IC section of the secure memory card to perform processing.
. Can acquire the authentication key for conducting authentication with the IC section application (IC authentication section) and generate data required for authentication (encrypted or signed data for the random number provided by the IC section application) using the authentication key.

If the secure memory card has the non-authentication area and the authentication area as usual areas, in addition to the functions, the R/W unit needs to have the following capabilities of:
. Generating a command for reading and writing the authentication area.
. Acquiring the authentication key for conducting authentication with the control authentication section of the secure memory card and generating data required for authentication using the authentication key.

If the R/W unit (electronic device) holds the authentication key in ROM, etc., the authentication key is acquired therefrom. If the electronic device does not hold the authentication key, the authentication key is received from an external device (server, removable media, etc.,).

If the large-capacity nonvolatile memory 50 of the secure memory card 10 of the invention is replaced with any other storage medium, for example, a nonvolatile medium such as a hard disk, an optical disk, or a magneto-optical disk, a large-capacity, high-security memory device can be realized as in the invention, needless to say.

The secure memory card 10 of the invention need not be able to be attached to or detached from an electronic device and may be fixedly connected to an electronic device as in an integral-type device with an IC chip embedded in an electronic device, for example. The secure memory card 10 need not be shaped like a card/chip and may be a disk or tape. The electronic device (60, 61, 69) may be any if a memory device can be connected to it, such as a fixed terminal, a portable terminal, or a mobile telephone.

That is, in addition to the modes described in the embodiment of the invention, various modes in which an IC chip is embedded in a mobile telephone, in which a hard disk is placed in a fixed terminal, and the like are possible in response to the use.

While the invention has been described in detail with reference to the specific embodiment, it will be obvious to those skilled in the art that various changes and modifications can be made without departing from the spirit and the scope of the invention.

The present application is based on Japanese Patent Application (No. 2002-363597) filed on December 16, 2002, which is incorporated herein by reference.

### <Industrial Applicability>

As is obvious from the description made above, the memory device of the invention can have a memory area equal to a Smart card in security level and having by far larger storage capacity than the Smart card.

The memory device includes a plurality of memory areas different in security level and can deal with various services of digital cash, music delivery, etc., as one device. The sizes of the plurality of memory areas can be changed as required.

The electronic device (R/W unit) of the invention can provide various services making the most of the memory device.

## Claims

1. A memory device being connected to an electronic device fixedly or detachably, comprising:
first memory of non-tamper-resistance having a usual area that can be accessed from the electronic device and a secure area that cannot directly be accessed from the electronic device;
second memory of tamper resistance that cannot directly be accessed from the electronic device; and
a secure control section for managing access to the second memory,
wherein access to the secure area of the first memory from the electronic device can be made only through the secure control section.

2. The memory device according to claim 1, wherein upon reception of a command of the electronic device authenticated by the secure control section, the secure control section accesses the secure area or the second memory and writes or reads data.

3. The memory device according to claim 1 or 2,
wherein a encryption key is stored in the second memory, and
wherein the secure control section encrypts the data to be written into the secure area using the encryption key and writes the encrypted data and decrypts the data read from the secure area using the encryption key.

4. The memory device according to any one of claims 1 to 3, wherein the secure control section calculates a hash value of the data to be written into the secure area, stores the hash value in the second memory, calculates a hash value of the data read from the secure area, and compares the hash value with the hash value stored in the second memory.

5. The memory device according to claim 1, wherein the usual area of the first memory includes an authentication area that can be accessed only by electronic devices authenticated by a general control section for controlling the memory device and a non-authentication area that can be accessed even by an electronic device not authenticated.

6. The memory device according to any one of claims 1 to 5, wherein boundary address information indicating the boundary between the usual area and the secure area and logical-physical address translation tables describing the relationship between logical addresses and physical addresses in the usual area and the secure area are managed as address information of the first memory.

7. The memory device according to claim 6, wherein the address information of the first memory includes boundary address information indicating the boundary between the authentication area and the non-authentication area and logical-physical address translation tables in the authentication area and the non-authentication area.

8. The memory device according to claim 6 or 7, wherein the boundary address information and the logical-physical address translation tables are recorded in an address information management area of the first memory.

9. The memory device according to claim 6, wherein the boundary between the usual area and the secure area represented by the boundary address information is changed according to a command of the electronic device authenticated by the secure control section.

10. The memory device according to claim 7, wherein the boundary between the authentication area and the non-authentication area represented by the boundary address information is changed according to a command of the electronic device authenticated by the general control section.

11. The memory device according to claim 10,
wherein the boundary address information of the boundary between the authentication area and the non-authentication area is made up of a real boundary address and an assumed boundary address set with the secure area excluded, and
wherein the real boundary address is changed based on the assumed boundary address specified by a command of the electronic device authenticated by the general control section.

12. An electronic device for accessing a memory device having a first area, a second area, and a third area as memory areas,
wherein upon reception of an access request to the memory device, the electronic device:
accesses the first area of a non-tamper-resistant memory area of the memory device through a general control section of the memory device for controlling access to the memory device;
after authenticated by the general control section and a secure control section of the memory device for controlling access to the second area and the third area, accesses the second area of a non-tamper-resistant memory area other than the first area through the secure control section; and
after authentication with the secure control section, accesses the third area of a tamper-resistant memory area of the memory device through the general control section and the secure control section.

13. The electronic device according to claim 12, comprising:
first command generation means for generating a command for writing or reading data into or from the first area;
second command generation means for generating a command for requesting the secure control section to perform processing; and
first authentication processing means for acquiring an authentication key used for authentication with the secure control section and performing authentication processing with the secure control section.

14. The electronic device according to claim 12 or 13, wherein a non-authentication area of a partial area of the first area is accessed without authentication with the general control section and an authentication area of a part or all of the first area other than the non-authentication area is accessed after authentication with the general control section.

15. The electronic device according to claim 14, comprising:
third command generation means for generating a command for writing or reading data into or from the authentication area; and
second authentication processing means for acquiring an authentication key used for authentication with the general control section and performing authentication processing with the general control section.
